(19) Europäisches Patentamt
European Patent Office
Office européen des brevets

(11) Numéro de publication: **0 401 063 B1**

(12) # FASCICULE DE BREVET EUROPEEN

(45) Date de publication de fascicule du brevet: **02.11.94**

(51) Int. Cl.5: **C08G 18/38**

(21) Numéro de dépôt: **90401164.0**

(22) Date de dépôt: **27.04.90**

(54) **Polymères actifs en optique non linéaire.**

(30) Priorité: **03.05.89 FR 8905870**

(43) Date de publication de la demande:
**05.12.90 Bulletin 90/49**

(45) Mention de la délivrance du brevet:
**02.11.94 Bulletin 94/44**

(84) Etats contractants désignés:
**AT BE CH DE DK ES FR GB GR IT LI LU NL SE**

(56) Documents cités:
**DE-A- 2 426 172**
**DE-A- 3 636 972**
**FR-A- 1 219 438**
**JP-A-63 175 837**

(73) Titulaire: **FLAMEL TECHNOLOGIES**
**Parc Club du Moulin à Vent**
**33, avenue du Docteur Georges Levy**
**F-69693 Venissieux Cédex (FR)**

(72) Inventeur: **Barthélémy, Pascal**
**21, rue de la Part Dieu**
**F-69003 Lyon (FR)**
Inventeur: **Mignani, Gérard**
**2, avenue des Frères Lumière**
**F-69008 Lyon (FR)**
Inventeur: **Meyrueix, Rémi**
**112 Cours Albert Thomas**
**F-69008 Lyon (FR)**

(74) Mandataire: **Thibault, Jean-Marc et al**
**Cabinet Beau de Loménie**
**51, Avenue Jean Jaurès**
**B.P. 7073**
**F-69301 Lyon Cédex 07 (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention concerne des polymères actifs en optique non linéaire.

Elle se rapporte plus particulièrement à un polymère de haut poids moléculaire présentant une concentration élevée en motifs actifs en optique non linéaire, ou hyperpolarisables.

On connaît de nombreux matériaux présentant une activité en optique non linéaire. Parmi ces matériaux, les matériaux organiques sont généralement constitués d'une matrice polymérisable dans laquelle est dissout ou incorporé un composé organique hyperpolarisable. Toutefois, ces matériaux présentent certains inconvénients, principalement dus à la solubilité et compatibilité du composé organique dans la matrice.

En outre, dans ces systèmes appelés également systèmes "Guest/host", il persiste toujours une certaine mobilité du composé hyperpolarisable. Ainsi, l'orientation des molécules imposée par soumission du matériau à un champ électrique, sera perdue au cours du vieillissement provoquant une diminution de l'activité en optique non linéaire dudit matériau.

Il a également été proposé des matériaux organiques polymérisés comprenant des groupements hyperpolymérisables greffés sur la chaîne principale du polymère par l'intermédiaire de chaînes hydrocarbonées plus ou moins longues.

Comme dans les systèmes précédents du type "Guest/host", il persiste une mobilité résiduelle des groupements hyperpolarisables conduisant à une diminution de l'activité en optique non linéaire au cours du vieillissement du matériau.

Enfin, il a été proposé des polymères obtenus par polymérisation d'un monomère comprenant des fonctions réactives portées par un groupement hyperpolarisable, avec un monomère à fonctions conjuguées.

Ainsi, si les fonctions réactives sont des fonctions hydroxyles, le monomère conjugué pourra être un diisocyanate.

Dans ces matériaux, le groupement hyperpolarisable fait partie de la chaîne principale ou squelette du polymère. En conséquence, la mobilité résiduelle de ces groupements est nulle, sinon très faible car elle requiert une mobilité de la chaîne du polymère.

Ainsi, la demande de brevet japonais n° 63-175837 décrit des composés de ce type contenant des unités répétitives de formules suivantes :

$$-[OCONH - R - NHCOO -(CH_2)_m - L -(CH_2)_m ]- \quad (A)$$

et $[OCONH - R - NHCOO -(CH_2)_k ]-$ (B)

dans lesquelles L représente un groupement hyperpolarisable de formule :

$$O_2N - G_1 - X = Y - G_2 - N$$

dans laquelle :

- X et Y représentent N et/ou CH
- $G_1$, $G_2$ représentent un groupe divalent choisi parmi le benzène, la pyridine, le furanne, le styrène, l'acétylène, l'éthylène.

Toutefois, pour obtenir un matériau de haut poids moléculaire, pouvant être facilement mis en forme, il est nécessaire d'ajouter des extenseurs de chaînes tels que des diols (motif récurent B).

Il convient de rappeler que pour qu'un composé ait une activité ONL quadratique, il faut en outre que le composé ait une bonne aptitude à être orienté au moyen d'un champ électrique et à garder cette orientation.

Les matériaux actifs en optique non linéaire sont généralement utilisés sous forme de film dans les dispositifs optiques ou optoélectriques, ces films devant être le plus régulier possible et de faible épaisseur (quelques dizaines de micron, $10^{-2}$ à $10^{-1}$ mm).

Les matériaux décrits ci-dessus présentent l'inconvénient majeur d'être faiblement filmogènes et faiblement solubles dans les solvants habituellement utilisés pour réaliser les films tels que, le dichlorométhane, le diméthylformamide (DMF), le N-méthyl pyrolidone (NMP), le chloroforme, la cyclohexanone, la méthylisobutylcétone.

Un des buts de la présente invention est notamment de remédier à ces inconvénients en proposant un matériaux organique du type de celui décrit dans le brevet japonais cité précédemment, présentant une meilleure filmogibilité et une solubilité élevée dans les solvants classiques. A cet effet, l'invention propose

un polymère, caractérisé en ce qu'il est essentiellement composé d'un motif récurrent de formule suivante :

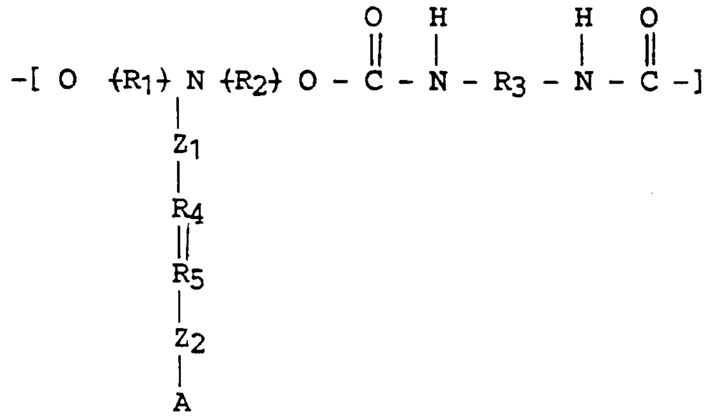

dans laquelle :

- $\mathbf{R_1}$, $\mathbf{R_2}$, identiques ou différents, représentent une chaîne méthylénique linéaire ou ramifiée comprenant de 2 à 6 atomes de carbone,
- $\mathbf{R_3}$ est un radical hydrocarboné aliphatique, aromatique ou arylaliphatique,
- $\mathbf{R_4}$, $\mathbf{R_5}$, identiques ou différents, représentent un atome d'azote, le radical **CH** ou bien $\mathbf{R_4}$ et $\mathbf{R_5}$ sont des carbones, de manière que la liaison $\mathbf{R_4}$-$\mathbf{R_5}$ soit une triple liaison,
- $\mathbf{Z_1}$, $\mathbf{Z_2}$, identiques ou différents, représentent un groupement aromatique comprenant au moins un substituant $\mathbf{R_7}$ autre que le radical **A** et choisis parmi les radicaux aliphatiques linéaires ou ramifiés comprenant de 1 à 6 atomes de carbone,
- **A** représente un groupement accepteur d'électrons, de préférence, du type cyano ou nitro, le radical $\mathbf{Z_2}$ pouvant porter plusieurs groupements **A**.

Parmi les groupements accepteurs d'électrons, les groupements nitro et cyano sont préférés.

Selon une caractéristique de l'invention, les groupements aromatiques $\mathbf{Z_1}$, $\mathbf{Z_2}$ sont choisis parmi les groupements phénylène, biphénylène, naphtylène,

Les radicaux $\mathbf{R_7}$ préférés sont des radicaux moyennement encombrants, c'est-à-dire qu'ils correspondent à l'encombrement d'un isopropyle ou isoamyle.

Lorsque $\mathbf{R_7}$ est situé sur le groupement $\mathbf{Z_1}$, il est avantageusement donneur tandis que lorsqu'il est situé sur $\mathbf{Z_2}$, il est avantageusement accepteur. Les radicaux $\mathbf{R_7}$ sont avantageusement situés en position ortho par rapport à la chaîne — $\mathbf{R_4}$ = $\mathbf{R_5}$ —.

Ainsi une des familles préférées des composés selon l'invention est telle que l'enchaînement -$Z_1$ - $R_4$ = $R_5$ - $Z_2$ - réponde à la formule générale :

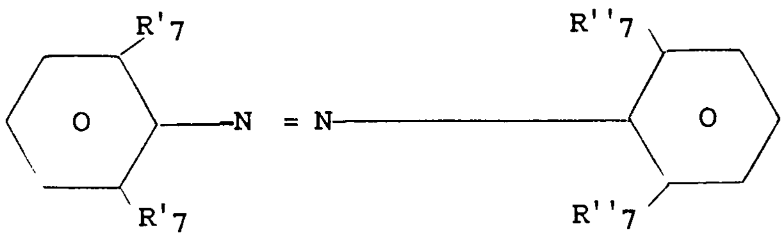

R'$_7$ étant choisi parmi les groupes méthyle, éthyle, isopropyle, propyle, isobutyle et butyle. R''$_7$ étant choisi parmi les groupes méthyle, éthyle, isopropyle, propyle, isobutyle, et butyle.

Par radical alkyle inférieur, on entend les radicaux aliphatiques linéaires ou ramifiés comprenant de 1 à 6 atomes de carbone.

Les radicaux $R_7$ préférés de l'invention sont les radicaux méthyle, éthyle.

Selon une autre caractéristique de l'invention le poids moléculaire $\overline{M}_n$ du matériau de l'invention est compris entre 1000 et 15000 tandis que $\overline{M}_w$ est compris entre 3000 et 100000.

Le radical $R_3$ est un reste hydrocarboné du composé diisocyanate utilisé comme monomère pour la formation du matériau.

Parmi les diisocyanates, on peut citer à titre d'exemple l'hexaméthylène diisocyanate (HDI), le diphényl éther diisocyanate (DIDE), le diphényl méthylène diisocyanate (MDI) ou le naphtyl diisocyanate.
Sans qu'il soit possible de donner une quelconque explication, les dits isocyanates aromatiques et notamment le diphényl méthylène diisocyanate donne des résultats particulièrement bons, notamment en ce qui concerne l'absence de relaxation de la polarisation au cours du temps.

Les polymères préférés de l'invention ont pour motif récurent, les motifs de formules suivantes :

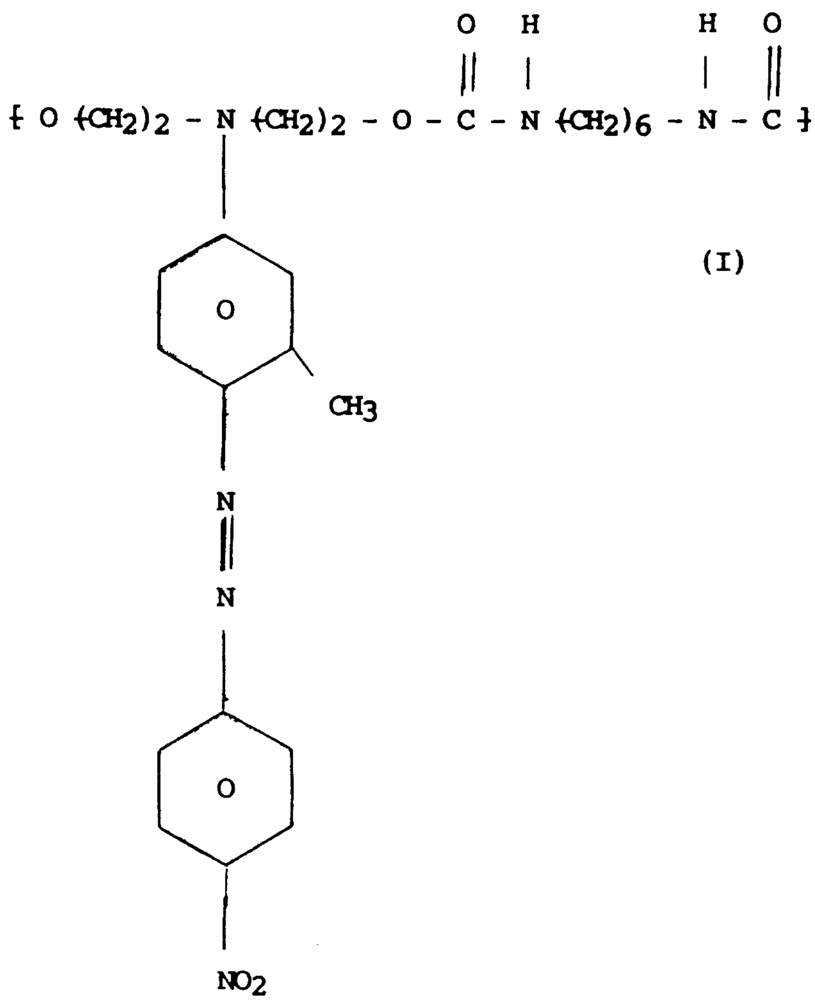

(I)

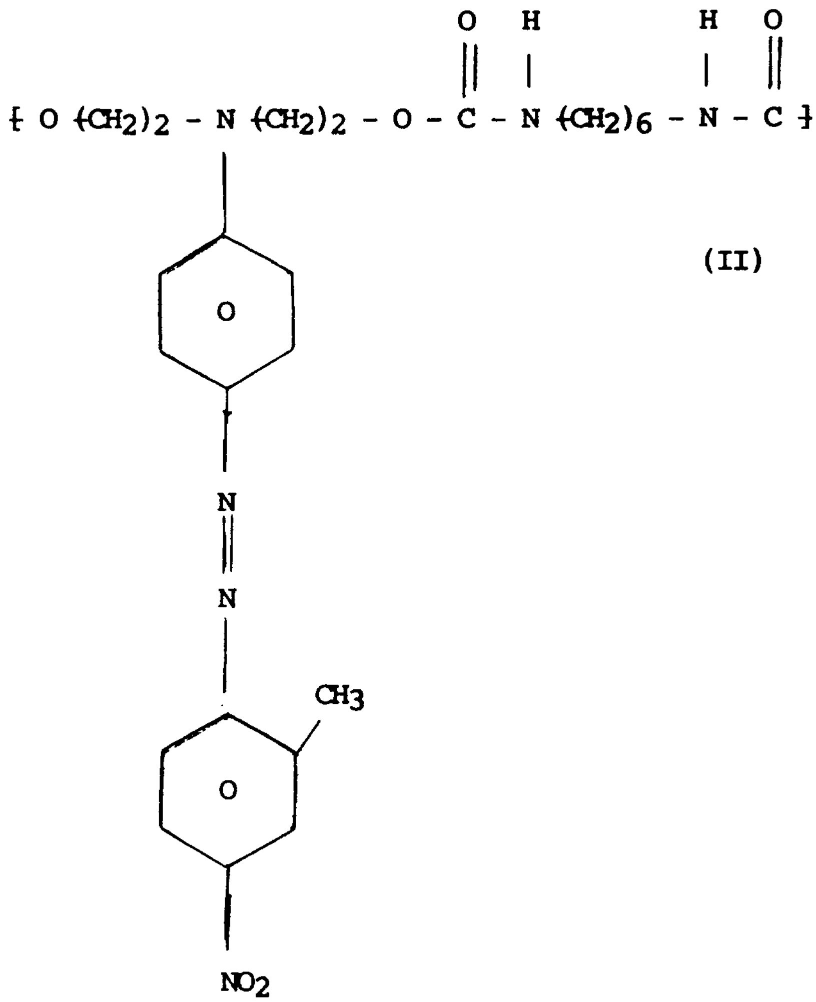

(II)

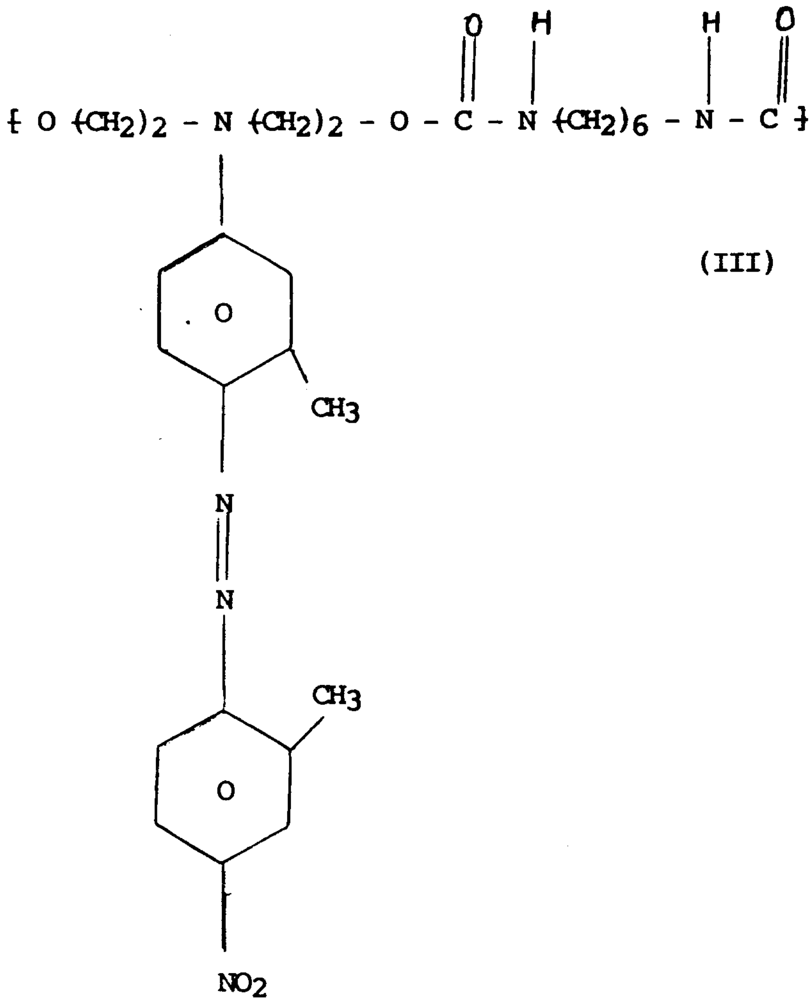

(III)

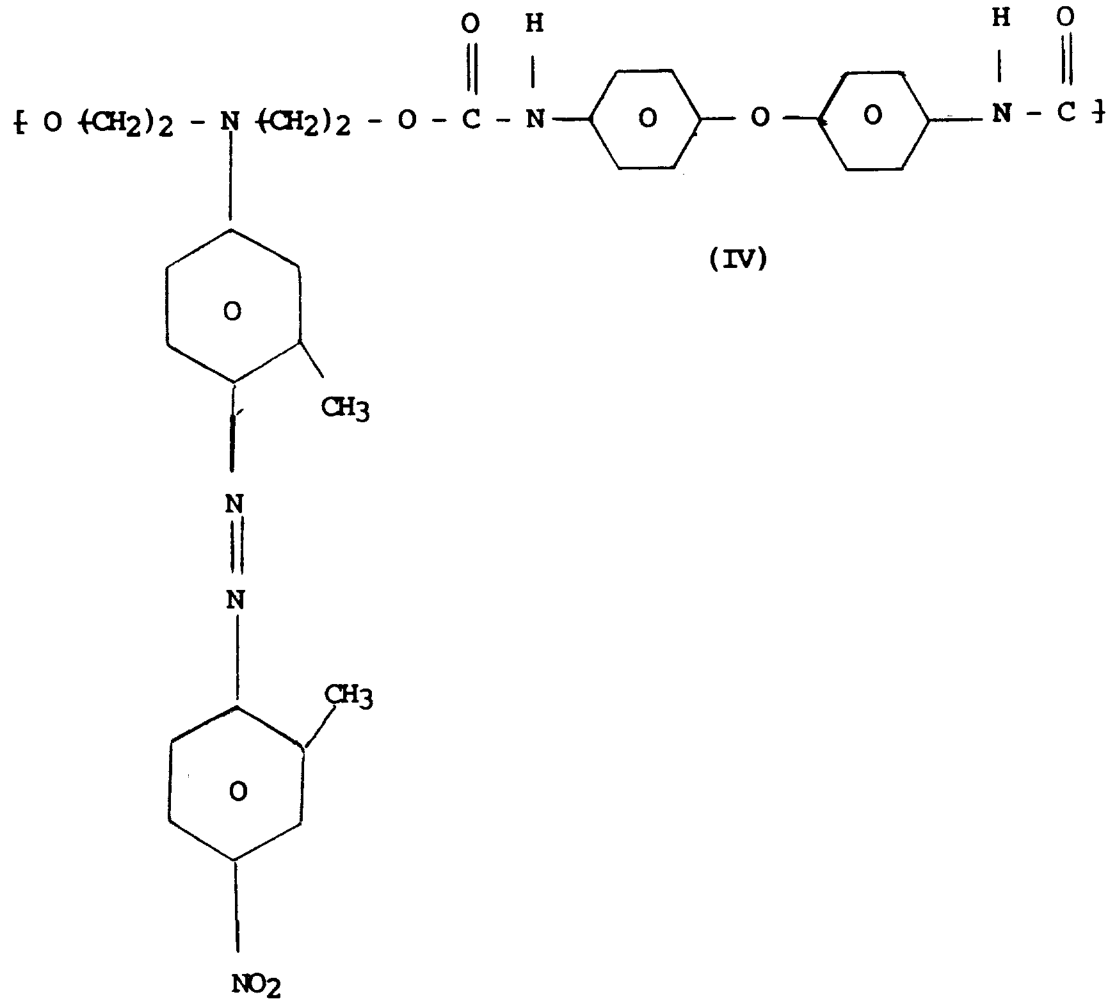

(IV)

Ces matériaux présentent une meilleure solubilité dans les solvants et peuvent donc être facilement mise en forme notamment pour la réalisation d'un film ou d'un revêtement et s'oriente facilement dans un champ électrique pendant la réalisation du film.

Les composés ne comportant pas de radical $R_7$ sont très difficiles à mettre sous forme de film orienté lorsque l'on utilise les techniques de synthèse classique, c'est-à-dire les techniques utilisant un dérivé de l'étain comme catalyseur de polycondensation. Ce catalyseur est éliminé par lavage à l'eau. Pour obtenir un polycondensat filmable, il a été trouvé qu'il fallait supprimer, et catalyse, et lavage à l'eau. Cette suppression a été rendue possible par la découverte que les anilines selon l'invention catalysait la condensation dès lors qu'elles représentent en mole au moins 50 % des dialcools à condenser avec les polyisocyanate, de préférence au moins 80 %.

Il est ainsi possible de produire un collodion filmable et orientable sous "champ électrique."

Pour l'opération de la mise sous forme de film et de polarisation, on utilise en général des techniques décrites sommairement ci-après.

Mise sous forme de film

Sur une plaque de verre recouverte d'une couche conductrice transparente à la longueur d'onde qui sera utilisée, le collodion dont la viscosité est ajustée à une valeur comprise entre $1/2.10^{-2}$ et $1/4.10^{3}$, de préférence de 50 à 200 centipoises par addition ou évaporation de solvants et filmé à "la barre de Mayer" et ce en utilisant un appareil tire film tel que par exemple celui vendu sous la dénomination commerciale K control coater de marque Erichsen motorisé.

Le film ainsi obtenu est séché progressivement jusqu'à une température au plus voisine de la température de transition vitreuse ($t_g$) ; le film est alors séché sous vide à une température au plus voisine de celle de la transition vitrese pendant 24 Heures.

Une fois le film sec, on dépose une seconde couche conductrice et deux électrodes sont déposées sur les

couches conductrices. Les couches conductrices sont soit en or, soit en divers oxydes conducteurs, tel que l'oxyde d'étain ou les oxydes mixtes d'étain et d'indium.

Polarisation

La polarisation est effectuée à une température au plus égale à la température de transition vitreuse finissante de préférence voisine de la température de transition vitreuse commençante. La tension de polarisation est appliquée entre les deux couches d'or. Cette tension est choisie entre 1 et 100 volts par micro/mètre (µm). Il est toutefois difficile et rare d'obtenir cette derrière valeur car les films ont tendance à claquer sous une forte différence de potentiel, c'est la raison pour laquelle on utilise plus couramment une tension comprise entre 10 et 50 volts par micro mètre, plus généralement encore entre 20 et 30 v/µm.
Lorsque la polarisation ne varie plus significativement au cours du temps, on arrête alors l'opération en refroidissant le film en maintenant une tension de polarisation. Cette tension de polarisation peut être légèrement inférieure à la tension de polarisation initiale.
Les polymères selon la présente invention ont montré de grandes dispositions à être polarisés et à maintenir cette polarisation au cours du temps.

Les techniques de polymérisation telles que celles qui viennent d'être décrites permet d'obtenir une valeur moyenne de cos $\theta$(⟨cos $\theta$ ⟩) est en général compris entre $10^{-2}$ et 0,5, plus généralement entre 0,1 et 0,2. Une tension de 20 à 25 v/µm donne environ un cos $\theta$ de 0,1. Comme l'on se place dans la zone où le cos $\theta$ croît linéairement en fonction du champ, il est possible en augmentant la différence de potentiel entre les deux faces du film d'augmenter l'orientation du polymère en augmentant le champ jusqu'à une valeur d'environ 100 volts/µm zone à laquelle il y a inflexion, l'orientation cessant de croître proportionnellement avec le champ. Rappelons que $\theta$ est l'angle formé par l'orientation des dipôles avec le champ électrique.

Cette polarisation ne décroît que très lentement au cours de temps au contraire des autres matériaux utilisés dans l'optique non linéaire. Ainsi, le composé de l'exemple N° 12 donne une décroissance au cours du premier mois de la polarisation d'environ 15 % alors que celui de l'exemple N° 13 conduit à un composé dont la décroissance n'est que de 7 %.
Ceci doit être comparé avec le composé constitué de red. 17 (10 %) et de polymétacrylates de méthyle (environ 90 %) qui a été étudié dans l'article de M. A. Montazani et al. J. opt. soc. am. (B) vol.6 N° 4 page 733 (1989) dans lequel il était indiqué qu'en un mois 50 % de la polarisation avait disparue.

Par ailleurs, comme le montreront les résultats ci-dessous, la présence des substituants dans les chaînes aromatiques $Z_1$, $Z_2$ permet d'obtenir des matériaux présentant une longueur d'onde maximale d'adsorption (λ max) au moins équivalente, et généralement supérieure à celle des matériaux ne comprenant pas de substituants.

En outre, les températures de transition vitreuse de ces matériaux sont plus élevées que celles des matériaux ne comprenant pas de substituants, et donc présente de meilleures propriétés mécaniques et surtout une bonne conservation des propriétés optiques au cours du vieillissement.

De plus, comme ces polymères présentent une bonne solubilité sans qu'il soit nécessaire d'utiliser des extenseurs de chaîne comme des diols, la teneur en motif actif en optique non linéaire ou hyperpolarisable sera plus importante et donc l'activité en optique non linéaire de ces matériaux est plus élevée.

Enfin, la présence des substituants modifie la structure électronique de la molécule et favorise la forme de la molécule qui permet une meilleure délocalisation électronique et donc augmente l'hyperpolarisibilité des molécules.

Ces polymères sont notamment utilisés dans les dispositifs optiques et optoélectriques tels que, par exemple, des interrupteurs, modulateurs, coupleurs directionnels, bistables.

Les avantages détails et buts de l'invention apparaîtront plus clairement au vu des exemples donnés ci-dessous uniquement à titre indicatif.

La présence des substituants modifie la structure électronique de la molécule. Ainsi, il est possible de régler et modifier la longueur d'onde d'absorption maximale (λ max) du polymère. A titre d'exemple, les substituants électrodonneurs tels que les radicaux alkyles portés par le radical $Z_1$ permettent d'augmenter le max, au contraire les substituants électroaccepteurs tels que les halogènes portés par le radical $Z_1$ diminuent le λ max (voir l'article publié par J.B.Dickey et Al dans Am. Dyestuff reporter (1965) page 44).

La présence d'un substituant en position ortho par rapport au groupement $-R_4=R_5-$, porté par le radical $Z_1$ et le radical $Z_2$ favorise la conformation trans de la molécule. Cette conformation permet une meilleure délocalisation électronique dans la molécule et donc augmente l'hyperpolarisabilité de celle-ci (voir l'article S.Yamahamoto et al bull. of Chemical Society of Japan vol 44 (1971) p 2018).

Les techniques de synthèse du polymère objet de la présente invention sont connues per se sauf en ce qui concerne l'autocatalyse.

Ainsi, il est aisé pour l'homme de métier de réaliser tout polymère entrant dans le cadre de l'invention en utilisant comme paradigmes les exemples de synthèse donnés dans la suite de la description.
Les composés actifs en ONL présentant les fonctions diols peuvent être obtenus de la manière suivante :

1 Accès aux précurseurs organosolubles

Dans notre cas, tous las Réd doivent posséder des fonctions "diols" de type :

$HO - (CH_2)_n - N - (CH_2)_n OH$

en général ; le plus industriel :

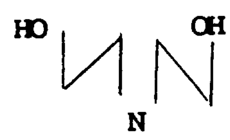

par exemple :

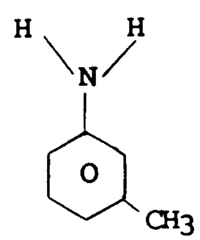

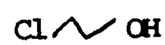

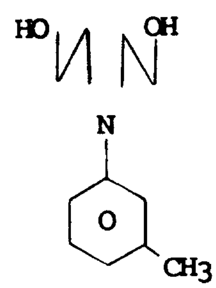

voire par exemple : mode opératoire
W - ROSS ; J. Chem.Soc (1949), 183

2 Accès aux "Réd" de type diazo

On utilise en général une réaction de copulation classique, par exemple Synthèse du Red 17.

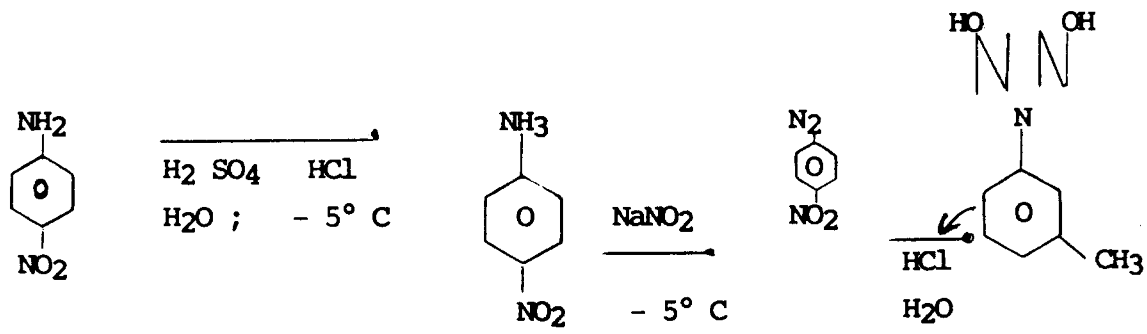


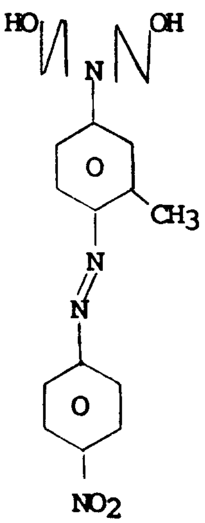

Red 17

Mode opératoire général

On introduit dans un réacteur une solution diluée d'acide fort (type HCl ou $H_2SO_4$) ; 50 % W ; on rajoute ensuite un équivalent d'aniline (par exemple :

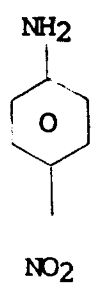

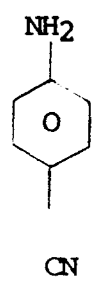

, ....) ; après dissolution totale on refroidit vers - 5° C (à l'aide d'un d'eau glacé) et on rajoute ensuite un équivalent de $NaNO_2$ dans le minimum d'eau. On laisse le diazo se faire ( 1/2 h à 1 heure). On rajoute ensuite le composé à copuler (en général

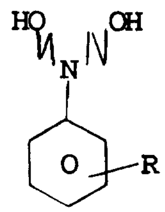

On laisse réagir 1 heure à 2 heures à température ambiante. Il y a formation d'un précipité ; on amène ensuite le PH vers 3 à l'aide d'une addition de $CH_3CO_2Na$ ; on filtre ; on lave à l'eau (PH = 7) ; on sèche sous vide ; on recristallise si nécessaire (en général dans l'alcool) ; on récupère le diazo avec un rendement de l'ordre de 70-95 %.
par exemple :
"AZO and diazo chemistry" : ZOLLINGER. Interscience publishers Inc ; New York, 1961.

3 Accès aux Red de type sty lbène

Par exemple dans le brevet US 4757130 accès au stylbène suivant :

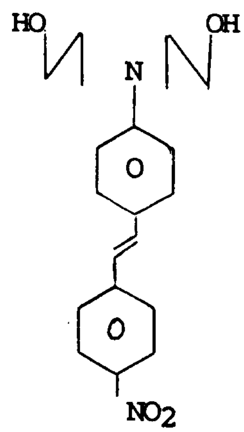

1

Un composé de type 1 peut être préparé via une réaction de condensation

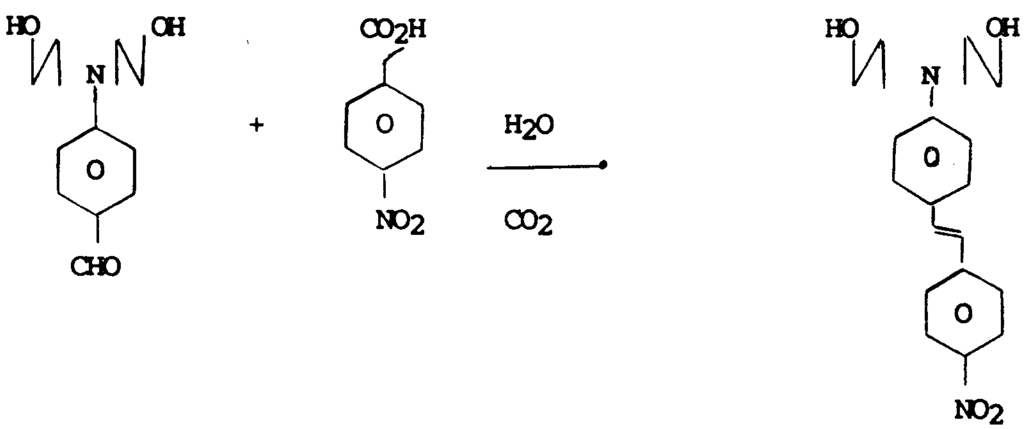


voire en particulier : thème sur la synthèse des styblène.
K. BECKER ; Synthèse 341 (1983).

4 Accès aux Red. de type alcyne par exemple

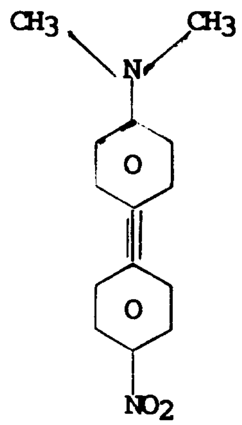

US4603187

pour la synthèse : voire organic syntheses call.
Vol. III, 786 (1955)
Vol. IV, 857 (1963)

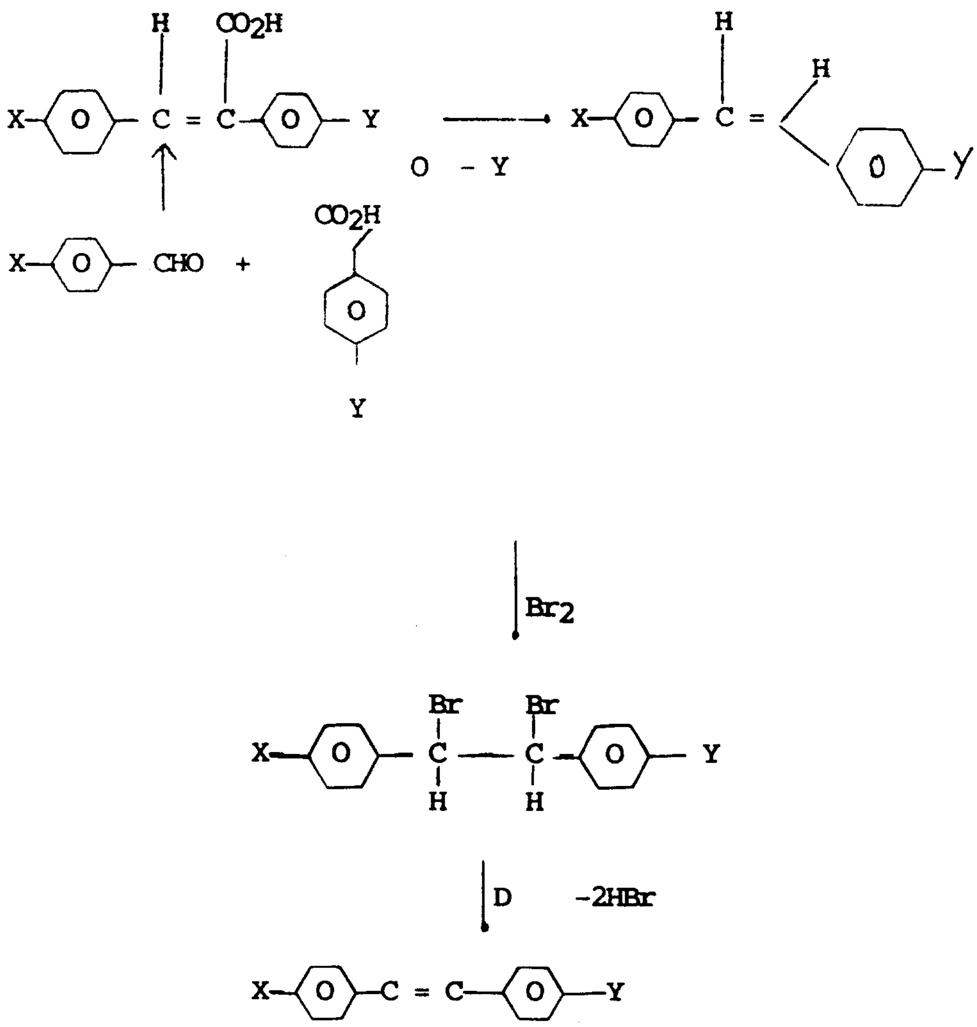

EXEMPLE 1

On porte à 90 °C, 2,97 x $10^{-3}$ mole du diol de formule ci-dessous dans quelques millilitres de 1-3 diméthyl-2-imidazolidinone (DMEU) et quelques gouttes de dilaurate de dibutylétain (DLDBE). On rajoute ensuite une solution d'hexaméthylène diisocyanate (HDI) dans quelques millilitres de DMEU (rapport diol/HDI = 1)

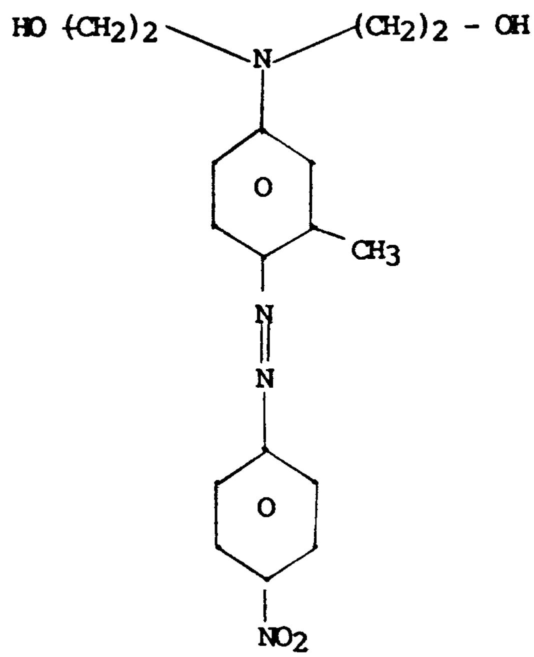

Cette réaction est conduite à 90 °C pendant 4 heures.

La masse réactionnelle est coulée dans 2 litres d'eau.

Le précipité obtenu est filtré, lavé à l'eau puis séché.

Le produit obtenu est un polymère comprenant un motif récurent de formule I dont le poids moléculaire $\overline{M}_n$ = 9950, $\overline{M}_w$ = 33820.

La température de transition vitreuse mesurée au pendule à fiche est de 77 °C.

La structure du polymère déterminée par analyse thermique différentielle (ATD) est amorphe, sa formule est confirmée par analyses spectrales.

Il présente une longueur d'onde maximale d'adsorption (λ max) dans le N-méthylpyrolidone (NMP) égale à 500 nm.

EXEMPLE 2

On répète l'exemple 1, en utilisant comme solvant le diméthyl formamide (DMF) à la place du DMEU, le diisocyanate (HDI) et le diol (voir formule dans l'exemple 1) étant mis en réaction dans des quantités équimolaires.

Le produit obtenu après filtration, lavage à l'eau et séchage a un poids moléculaire $\overline{M}_n$ = 4210 et $\overline{M}_w$ = 8850, une température (Tg) de transition vitreuse égale à : 78 °C.

La structure de ce polymère est également amorphe et le λ max (NMP) est égal à 500 nm.

Sa formule a été confirmée par analyses spectrales.

EXEMPLE 3

On répète l'exemple 1 mais en utilisant comme diol le composé de formule suivante (le rapport molaire diol/isocyanate étant égal à 1) :

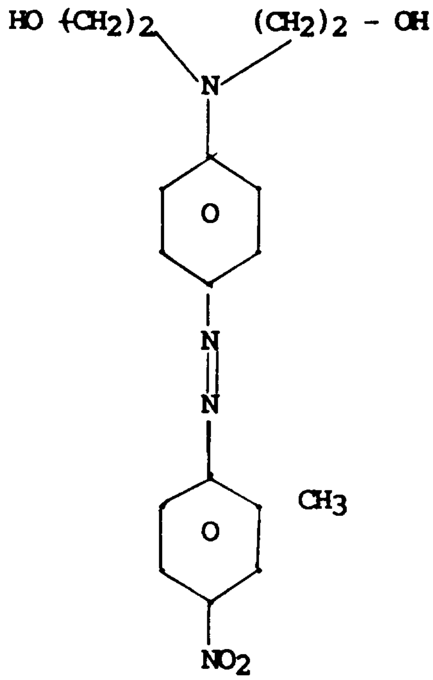

Le polymère obtenu de formule II a une couleur rouge, un poids moléculaire $\overline{M}_n$ = 9260, $\overline{M}_w$ = 47480, une longueur d'onde max (NMP) = 487 nm et une Tg : 77 °C. Sa formule a été confirmée par analyses spectrales et il présente également une structure amorphe.

EXEMPLE 4

L'exemple 1 est répété en prenant comme diol, le composé de formule suivante (le rapport molaire diol/diisocyanate étant égal à 1%

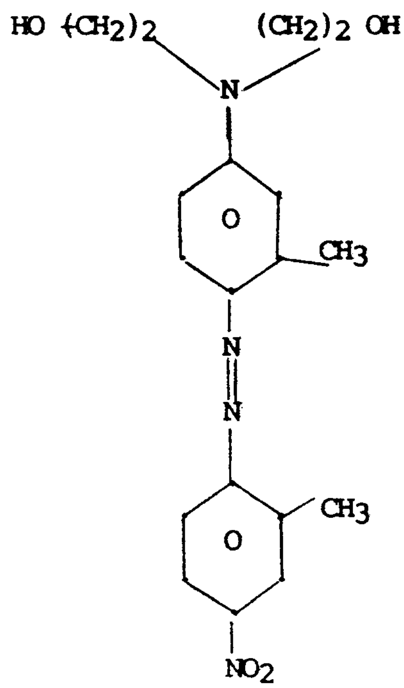

Le produit obtenu, de formule III, a un poids moléculaire $\overline{M}_n$ = 7170 et $\overline{M}_w$ = 21970 et une structure amorphe.

Sa longueur d'onde max (NMP) est égale à 496 nm, et la Tg de ce produit est de 80 °C. Sa formule a également été contrôlée par analyses spectrales.

EXEMPLE 5

L'exemple 4 est répété mais en utilisant comme diisocyanate à la place de l'hexaméthylène diisocyanate, le diphényl éther diisocyanate (DIDE).

Le polymère obtenu de formule IV a un poids moléculaire $\overline{M}_n$ = 10490 et $\overline{M}_w$ = 26960.

Il présente une longueur d'onde $\lambda$ max (NMP) égale à 494 nm et une Tg de 128 °C. Sa structure est amorphe et sa formule a été contrôlée par analyses spectrales.

EXEMPLE 6

L'exemple 4 est répété mais sans utiliser de catalyseur (DLDBE).

Le polymère obtenu, de structure amorphe, présente un poids moléculaire $\overline{M}_n$ = 3100 et $\overline{M}_w$ = 6630, un $\lambda$ max (NMP) = 496 nm et une température de transition vitreuse (Tg) égale à 81 °C.

EXEMPLE 7

L'exemple 1 est répété mais en utilisant le diol de formule ci-dessous :

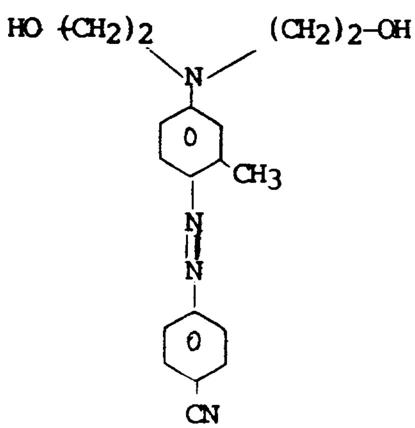

Le polymère obtenu a comme formule :

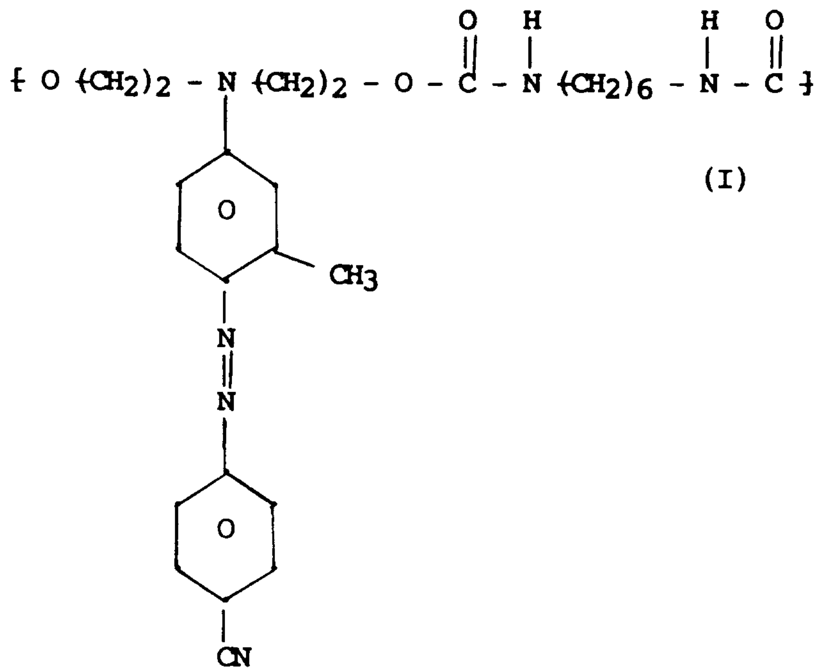

(I)

Il possède une température de transition vitreuse Tg égale à 83 °C et présente une longueur d'onde maximale d'adsorption (λ max) dans le NMP de 462 nm.

Sa structure est amorphe et sa formule a été vérifiée par analyses spectrales.

Exemple 8

L'exemple 1 est répété mais en utilisant à la place de HDI, le diisocyanate suivant :

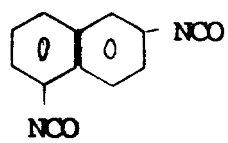

Le polymère obtenu présente une température de transition vitreuse Tg égale à 135 °C, un max (NMP) égal à 502 nm.

Il a une structure amorphe et sa formule a été vérifiée par analyses spectrales.

EXEMPLE 9 comparatif

L'exemple 1 est répété mais en utilisant un diol de formule suivante :

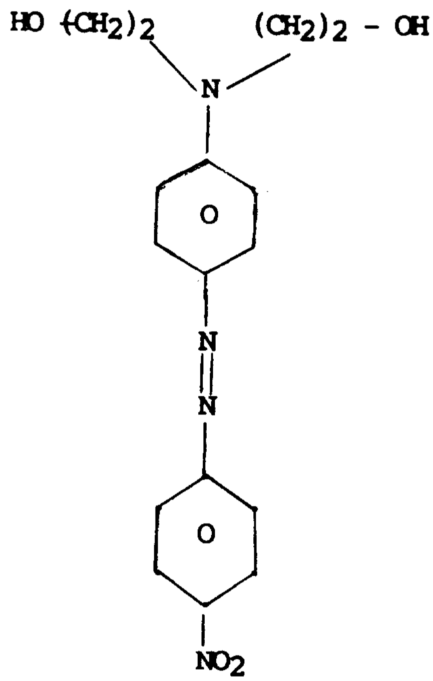

le polymère obtenu qui correspond au polymère décrit dans le brevet japonais n° 63-175837 présente un poids moléculaire $\overline{M}_n$ = 7680 et $\overline{M}_w$ = 22870.

Il présente également une longueur d'onde λ max (NMP) = 487 nm et une Tg de 70°C. Comme les autres polymères, il présente une structure amorphe et sa formule a été contrôlée par analyses spectrales.

La solubilité de ces différents polymères a été déterminée à 25°C pour différents solvants, les résultats sont indiqués dans le tableau ci-dessous.

| SOLVANT | SOLUBILITE EN G/100 G DE SOLVANT | | | |
|---|---|---|---|---|
| | $CH_2Cl_2$ | DMF | NMP | $CHCl_3$ |
| N°1 formule I | 1,26 | 4,19 | 2,89 | 2,54 |
| N° 3 formule II | 0,85 | 2,79 | 2,02 | 1,67 |
| N° 4 formule III | 3,98 | 3,80 | 5,85 | 4,97 |
| N° 5 formule IV | 0,79 | 10,39 | 4,10 | 0,75 |
| N° 9 comparatif | < 0,11 | 2,12 | 1,88 | < 0,2 |

Ces résultats montrent clairement la meilleure solubilité de ces nouveaux polymères dans les solvants. Ainsi, il sera plus facile de réaliser un film avec ces polymères.

Cette meilleure filmogilbilité est montrée de manière évidente par le fait que les films obtenus avec le matériau de l'exemple 9 ou du brevet japonais cités ont une épaisseur de l'ordre de 300 µm tandis que les films obtenus avec les matériaux conformes à l'invention ont une épaisseur de l'ordre de 10 à 50 µm et même inférieure à 10 µm.

Par ailleurs, la présence de substituants sur les cycles du motif hyperpolarisable permet d'augmenter la longueur d'onde maximale d'adsorption et la température de transition vitreuse, ce qui améliore les propriétés de ces matériaux, tant d'un point de vue optique que mécanique.

Ces matériaux présentant une susceptiblité quadratique $\chi^2$ élevée. A titre d'exemple, la susceptibilité quadratique $\chi^2{}_{333}$ des polymères obtenus à l'exemple 4 a été déterminée au moyen d'un interféromètre de MACH ZENDER par une méthode décrite brièvement ci-dessous.

La susceptibilité $\chi^2$ est mesurée aux fréquences (-ω; ω, o) dans une expérience d'électrooptique. Pour cela, le film est déposé sur une lame de verre recouverte d'un oxyde conducteur transparent ($SnO_2$). La

face extérieure du film est recouverte par une couche d'or semi-transparente, l'oxyde et l'or servant d'électrodes par lesquelles n polarise le film pour le rendre non centrosymétrique. Après refroidissement, l'ensemble est placé dans l'un des bras d'un interféromètre de MACH ZENDER et traversé sous incidence normale par un faisceau laser de longueur d'onde égale à 633 nm.

Le film est ensuite soumis à une tension alternative de 1 KHz et 10V.

La susceptibilité quadratique

$$\chi^2_{113}(-\omega\ ;\ \omega, o)$$

est déduite du retard de phase ΔΦ provoqué par la tension appliquée au film par la relation suivante :

$$\Delta\Phi = \frac{2\pi}{\lambda} \cdot L \cdot \frac{\chi^2_{113}}{n} \cdot \frac{V}{L} = \frac{2\pi\ \chi^2_{113}\ V}{\lambda \cdot n}$$

Dans laquelle :

λ est la longueur d'onde laser
n est l'indice de réfraction du film
V est la tension électrique du champ appliqué au film
L est l'épaisseur du film.

Le deuxième coefficient de susceptibilité

$$\chi^2_{333}$$

est donné par la relation

$$\chi^2_{333} = 3 . \chi^2_{113}$$

Cette relation est plus amplement décrite dans l'article de K.D. SINGER et al parue dans J. Opt. SOc. Am. B vol 4 n°6 pp 968 et suiv. (1987).

Les susceptibilités

$$\chi^2_{113}$$

et

$$\chi^2_{333}$$

sont reliées au coefficient électrooptique $r_{ijk}$ par les relations suivantes :

$$r_{113} = \frac{-2\chi^2_{113}}{n^4} \quad \text{et} \quad r_{333} = \frac{-2\chi^2_{333}}{n^4}$$

dans lesquelles n représente l'indice de réfraction du matériau.

Le film a été réalisé à partir d'une solution dans la cyclohexanone du polymère de l'exemple 4, la solution contenant 10 % d'extrait sec.

Le film réalisé a une épaisseur de 6,3 µm après séchage à 110 °C sous vide et est polarisé sous un champ électrique de 30 volts par micron à une température de 100 °C pendant 60 secondes.

La susceptibilité quadratique $\chi^2_{333}$ mesurée est égale à $80 \times 10^{-12}$ m.volt$^{-1}$.

Cette susceptibilité est très élevée pour un champ de polarisation relativement faible.

Exemple 10

Augmentation des masses moléculaires : addition de HDT 100

Dans un tricol de 250 ml sous azote, on introduit 9,44 g (0,0274 mole) de HDT 100 et 53,7 g de diméthyl acétamide ;

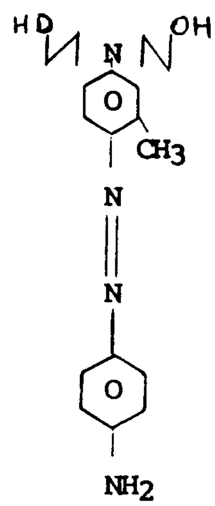

On porte l'ensemble à 64° C + 2° C, et on coule un mélange HDI-HDT 4,95 g de mélange HDI-HDT (% molaire)

{ 97,5 % de HDI     $OCN(CH_2)_6NCO$
{ 2,5 % de HDT

soit 0,0576 mole de fonction NCO (5,1 % d'excès).

Structure du hexadisocyanatrimère

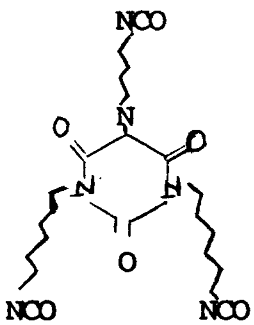

+

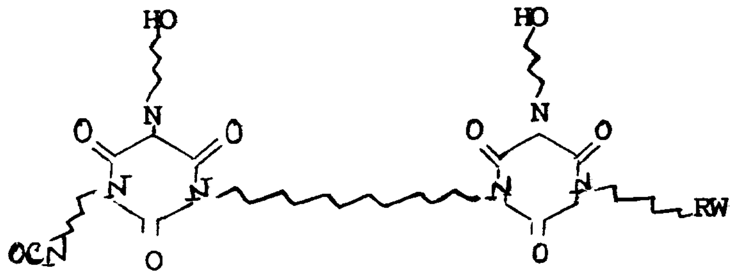

+

50 % massique

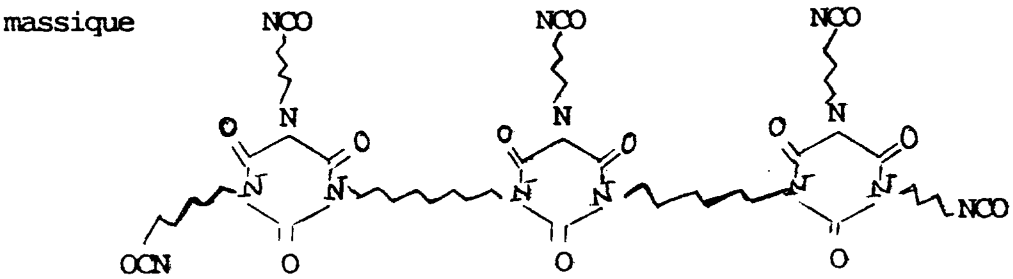

Durée de la coulée : 20 mn

On laisse réagir 20 heures à 64° C + 2° C.

La masse obtenue est introduite dans 500 ml d'eau sous une très forte agitation ; le précipité obtenu est lavé trois fois avec de l'eau et séché sous vide ; on obtient ainsi 14,4 g d'un solide rouge ; le rendement est quasi quantitatif.

Les analyses ultra-violet, infra-rouge et RMN du proton confirment la structure du polymère.

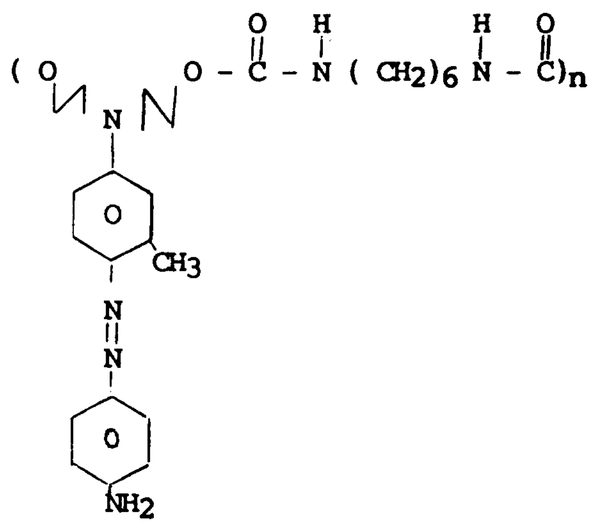

| | |
|---|---|
| Analyse GPC : | $\overline{M}_n$ = 14 000 |
| | $\overline{M}_w$ = 138 380 |
| Taux de polymérisation | = 9,88 |

Exemple 11

Addition de diamines

Exemple N° 11.1

Dans un ballon de 250 ml sous azote, on introduit 12,65 g (0,0367 mole) de Red 17 et 67,1 g de diméthylacétamide (sec). On chauffe à 60° C et on coule en 20 mn 6,83 g (0,0406 mole) de HDI.
On laisse réagir 4 heures à 60° C. Un dosage potentiométrique montre qu'il reste $8,68.10^{-3}$ équivalent de fonction NCO. On introduit ensuite $4,34.10^{-3}$ mole de $1^{-3}$ diamine propane

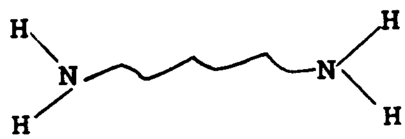

On laisse réagir 16 heures à température ambiante. La masse réactionnelle est ensuite traitée de façon habituelle.
On obtient ainsi 18,5 g d'un mélange rouge.
Rendement isolé 95 %.
Les analyses infra-rouge, ultra-violet et RMN du proton confirment la structure du polymère.
Analyse GPC : en cours.

Exemple N° 11.2

Dans un ballon de 250 ml sous azote, on introduit 14,29 g de Red 17 et 82,9 g de diméthylacétamide (sec). On chauffe à 60° C et on coule en 20 mn : 7,58 g (0,0450 mole) de HDI ; on laisse réagir 4 heures à 60° C. Un dosage potentiométrique montre qu'il reste $8,23.10^{-3}$ équivalent de fonction NCO. On rajoute ensuite 0,305 g ($4,11.10^{-3}$ mole) de méthyl-1, diamine 1,2 éthane.
On laisse réagir 16 heures à la température ambiante. La masse réactionnelle est ensuite traitée de façon habituelle. On récupère ainsi 20,5 g d'un solide rouge.
Les analyses infra-rouge, ultra-violet et RMN du proton confirment la structure du polymère.

Exemple 12

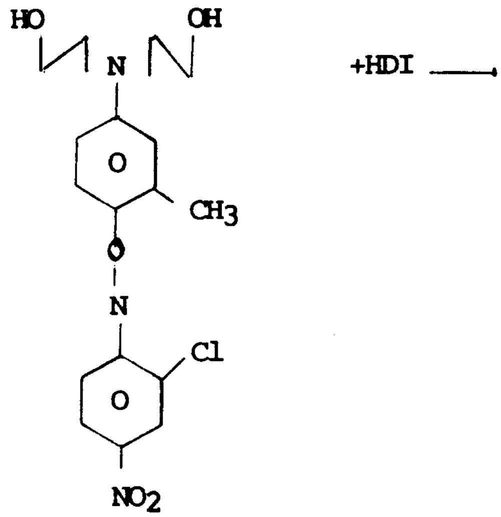


Dans un tricol de 250 ml sous azote ; on introduit 20,4 g de

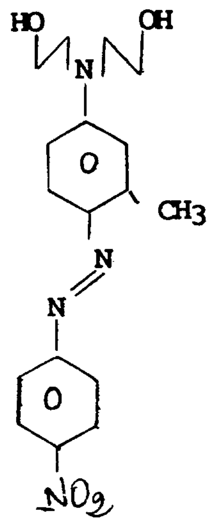

(0,0539 mole) ; 80 g de diméthyl acétamide sèche.
On chauffe à 65° C et on coule en 20 mn 9,2 g (0,0547 mole) de HDI ; on laisse réagir 16 heures à 65° C ; un dosage montre qu'il reste 0,6 % de NCO qui n'ait pas réagi ; on rajoute 364 mg de n.propyl amine ; on laisse réagir 1 heure à 65° C ; un dosage montre qu'il ne reste plus de fonction NCO.
On passe sur filtre de 0,2 µm (maille) et on récupère le collodion filmé.
Les analyses infra-rouges, ultra-violets, RMN du proton confirment la structure de polymère :
Tg (pendule à fibre) = 78° C.
Cette technique mesure sensiblement la température de transition vitreuse commençante.

Exemple 13 Red 17 + HDI

Dans un réacteur de 500 ml sous azote, on introduit 41,56 g (0,1207 mole) de Red 17 ; 180 g de diméthyl acétamide ; on chauffe à 60° C et on coule en 1 heure 20,56 g de HDI ; on laisse réagir 17 heures à 60° C ; un dosage montre qu'il reste 3,01 % de fonction NCO ; on rajoute 0,235 g de $CH_3OH$ ; on laisse réagir 30 mn à 60° C ; on passe sur filtre de 0,2 µm (maille) ; et on récupère un collodion filmable.

$\overline{M}n = 9750$ ; $\overline{M}w = 28780$ ; Tp = 2,95
"Les analyses infra-rouges, ultra-violets et RMN du proton confirment la structure du polymère."

**Revendications**

1. Polymère, caractérisé en ce qu'il est essentiellement composé d'un motif récurrent de formule suivante :

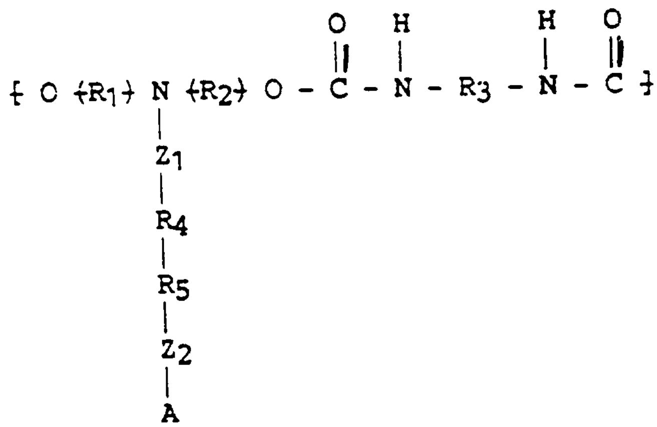

dans laquelle :
- **$R_1$**, **$R_2$**, identiques ou différents, représentent une chaîne méthylénique linéaire ou ramifiée comprenant de 2 à 6 atomes de carbone,
- **$R_3$** est un radical hydrocarboné aliphatique, aromatique ou arylaliphatique,
- **$R_4$**, **$R_5$**, identiques ou différents, représentent un atome d'azote, le radical **CH** ou bien **$R_4$** et **$R_5$** sont des carbones, de manière que la liaison **$R_4$-$R_5$** soit une triple liaison,
- **$Z_1$**, **$Z_2$**, identiques ou différents, représentent un groupement aromatique comprenant au moins un substituant **$R_7$** autre que le radical **A** et choisis parmi les radicaux aliphatiques linéaires ou ramifiés comprenant de 1 à 6 atomes de carbone,
- **A** représente un groupement accepteur d'électrons, de préférence, du type cyano ou nitro, le radical **$Z_2$** pouvant porter plusieurs groupements **A**.

2. Polymère selon la revendication 1, caractérisé en ce que les groupements aromatiques **$Z_1$**, **$Z_2$** sont choisis parmi les groupements phénylène, biphénylène ou naphtylène.

3. Polymère selon la revendication 1 ou 2, caractérisé en ce que le substituant **$R_7$** est un radical méthyle ou éthyle.

4. Polymère selon l'une des revendications précédentes, caractérisé en ce qu'il a un poids moléculaire $\overline{M}_n$ compris ente 1 000 et 15 000 et un poids moléculaire $\overline{M}_w$ compris entre 3 000 et 100 000.

5. Polymère selon l'une des revendications précédentes, caractérisé en ce que le radical **$R_3$** est un reste hydrocarboné d'un diisocyanate.

6. Polymère selon la revendication 5, caractérisé en ce que le diisocyanate précité est choisi dans le groupe comprenant l'hexaméthylène diisocyanate, le diphényl éther diisocyanate, le diphényl méthylène diisocyanate, le naphtyl diisocyanate.

7. Polymère selon l'une des revendications précédentes, caractérisé en ce qu'il a au moins un motif récurrent ayant une des formules suivantes :

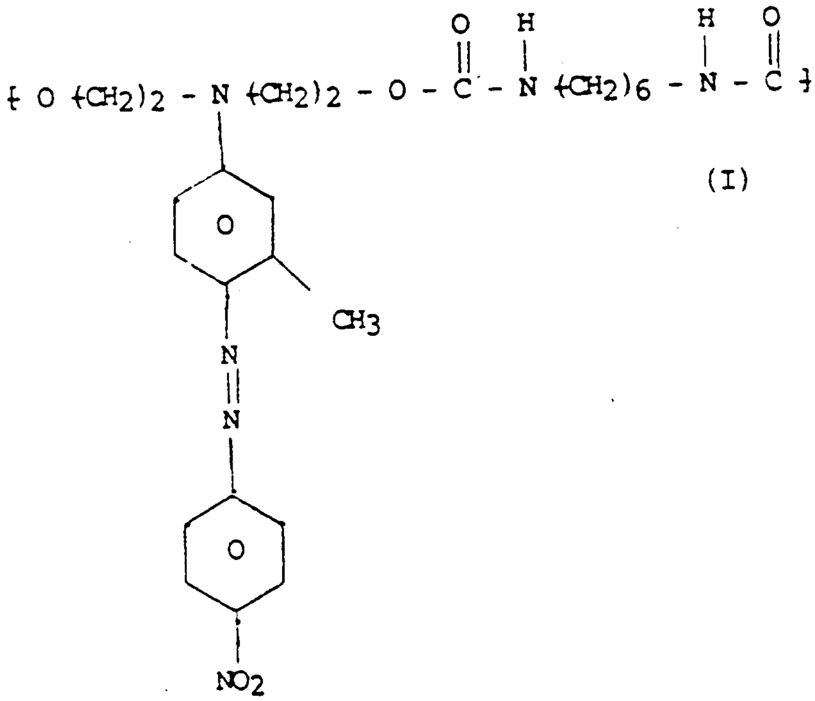

(I)

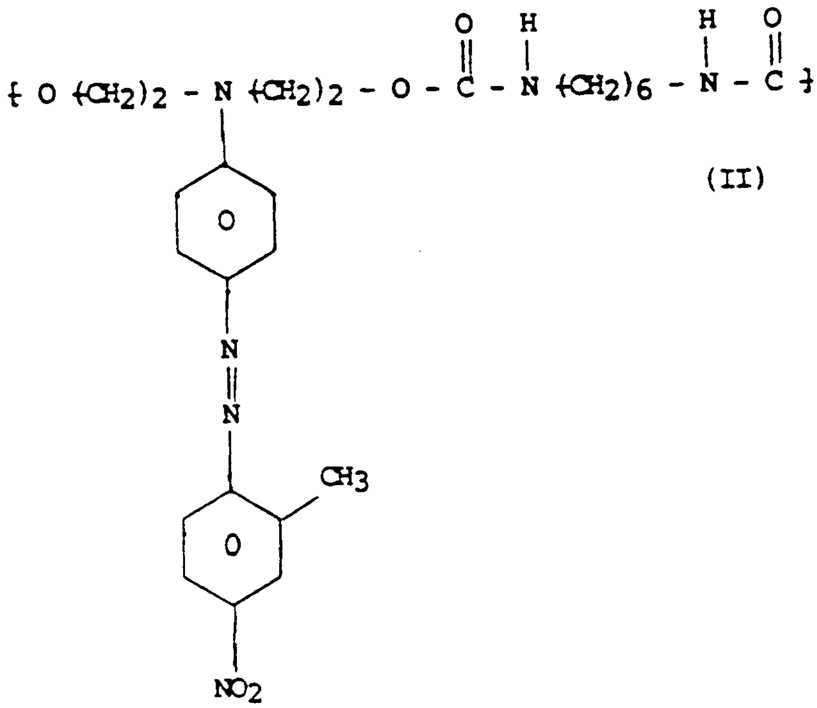

(II)

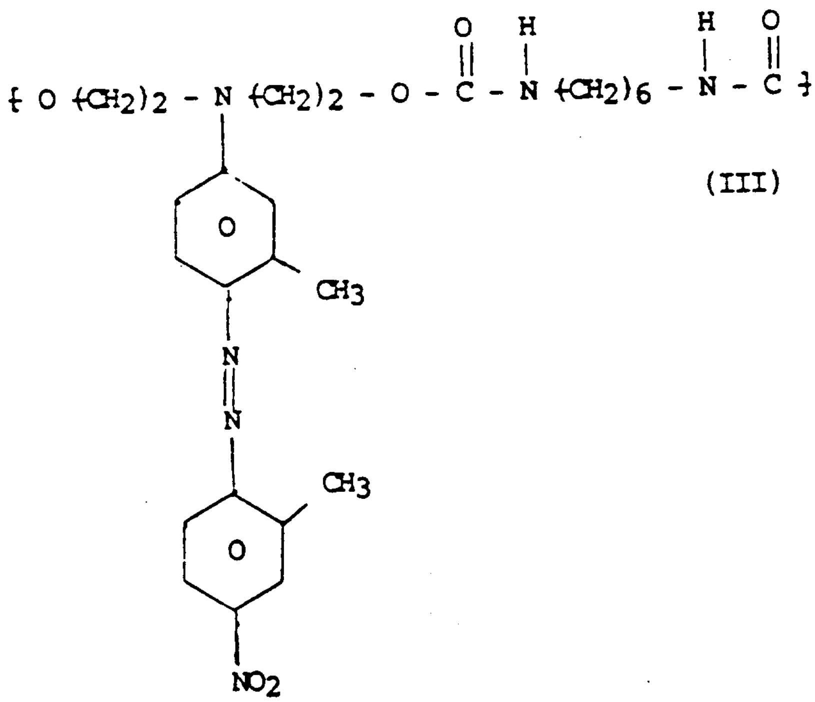

(III)

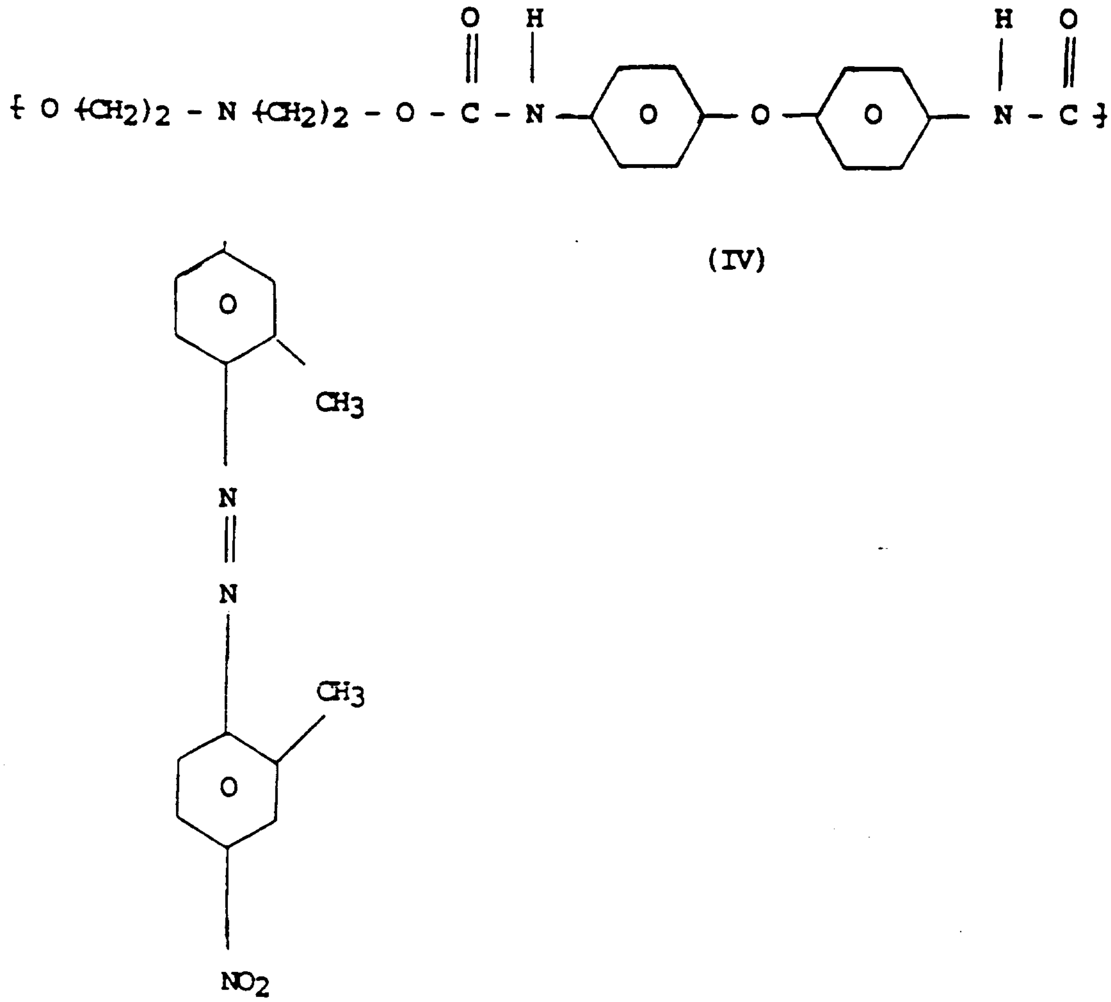

(IV)

8. Polymère selon l'une des revendications précédentes, caractérisé en ce qu'il est utilisé sous forme de film dont l'orientation des dipôles est telle que (**cos**$\theta$) soit au moins égal à $10^{-2}$.

9. Polymère selon l'une des revendications 1 à 7, caractérisé en ce qu'il est utilisé sous forme de revêtement.

10. Dispositif contenant au moins un élément actif en optique non linéaire, caractérisé en ce que ledit élément est constitué par le polymère selon l'une des revendications 1 à 7.

11. Procédé de polarisation d'un polymère selon les revendications 1 à 9, caractérisé par le fait que l'on soumet ledit matériau à un champ électrique compris entre 1 et 100 V par micromètre à une température comprise entre les températures de transition vitreuse commençante et finissante.

**Claims**

1. A polymer, characterised in that it is essentially composed of a recurrent pattern with the following formula:

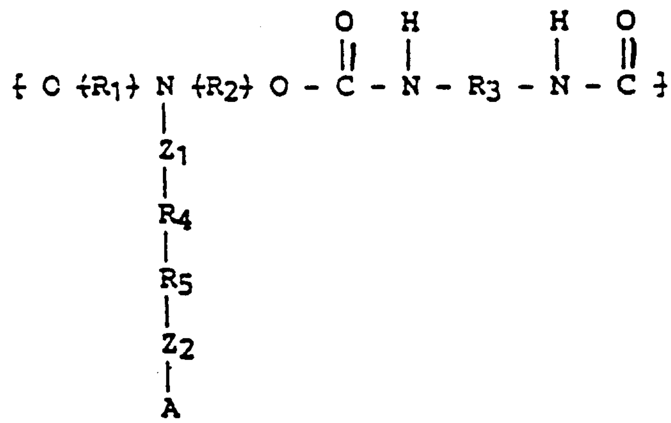

in which:

- $R_1$, $R_2$, which may be identical or different, represent a linear or branched methylene chain comprising from 2 to 6 carbon atoms,
- $R_3$ is an aliphatic, aromatic or arylaliphatic hydrocarbon radical,
- $R_4$, $R_5$, which may be identical or different, represent a nitrogen atom, and the CH or $R_4$ and $R_5$ radicals are carbons, so that the $R_4$-$R_5$ bond is a triple bond,
- $Z_1$, $Z_2$, which may be identical or different, represent an aromatic grouping comprising at least one $R_7$ substituent other than the radical A and chosen from among the linear or branched aliphatic radicals comprising from 1 to 6 carbon atoms,
- A represents an electron acceptor grouping, preferably of the cyano or nitro type, whilst the $Z_2$ radical may carry several A groupings.

**2.** A polymer according to Claim 1, characterised in that the aromatic groupings $Z_1$, $Z_2$ are chosen from among the phenylene, biphenylene or naphthylene groupings.

**3.** A polymer according to Claim 1 or 2, characterised in that the $R_7$ substituent is a methyl or ethyl radical.

**4.** A polymer according to one of the preceding claims, characterised in that it has a molecular weight $\overline{M}_n$ between 1,000 and 15,000 and a molecular weight $\overline{M}_w$ between 3,000 and 100,000.

**5.** A polymer according to one of the preceding claims, characterised in that the $R_3$ radical is a hydrocarbon residue of a diisocyanate.

**6.** A polymer according to Claim 5, characterised in that the aforesaid diisocyanate is chosen from the group comprising hexamethylene diisocyanate, diphenyl ether diisocyanate, diphenyl methylene diisocyanate and naphthyl diisocyanate.

**7.** A polymer according to one of the preceding claims, characterised in that it has at least one recurrent pattern with one of the following formulae:

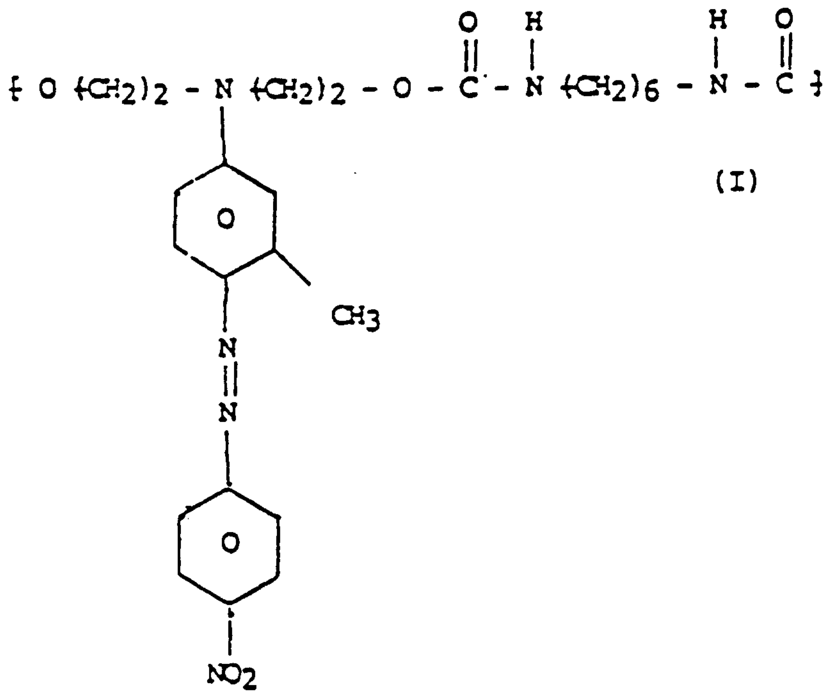

(I)

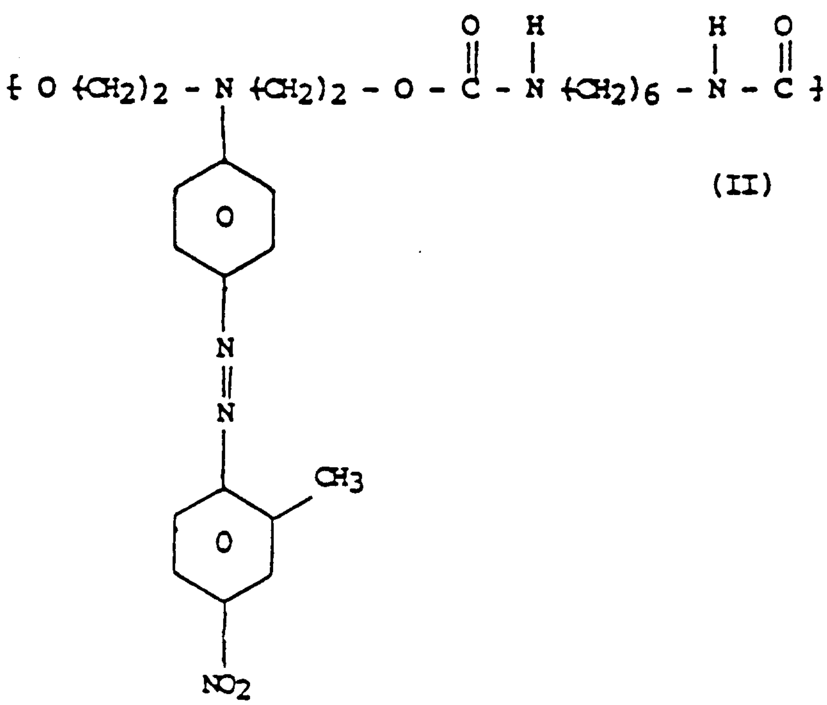

(II)

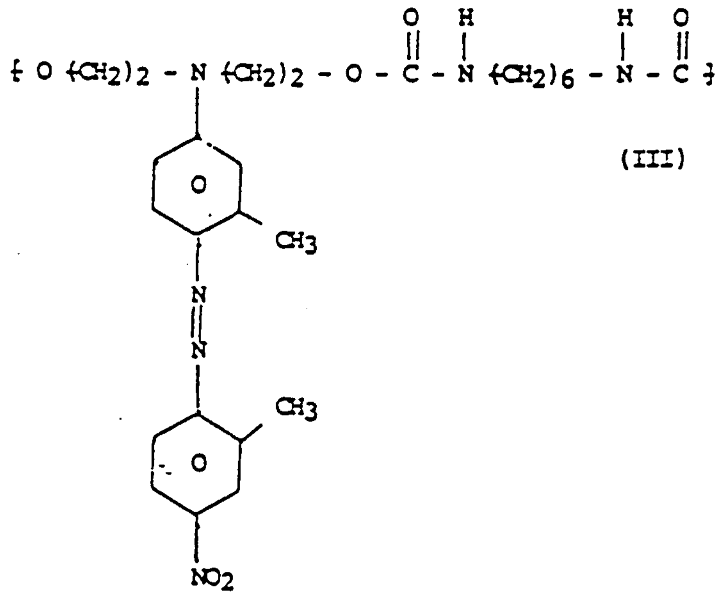

(III)

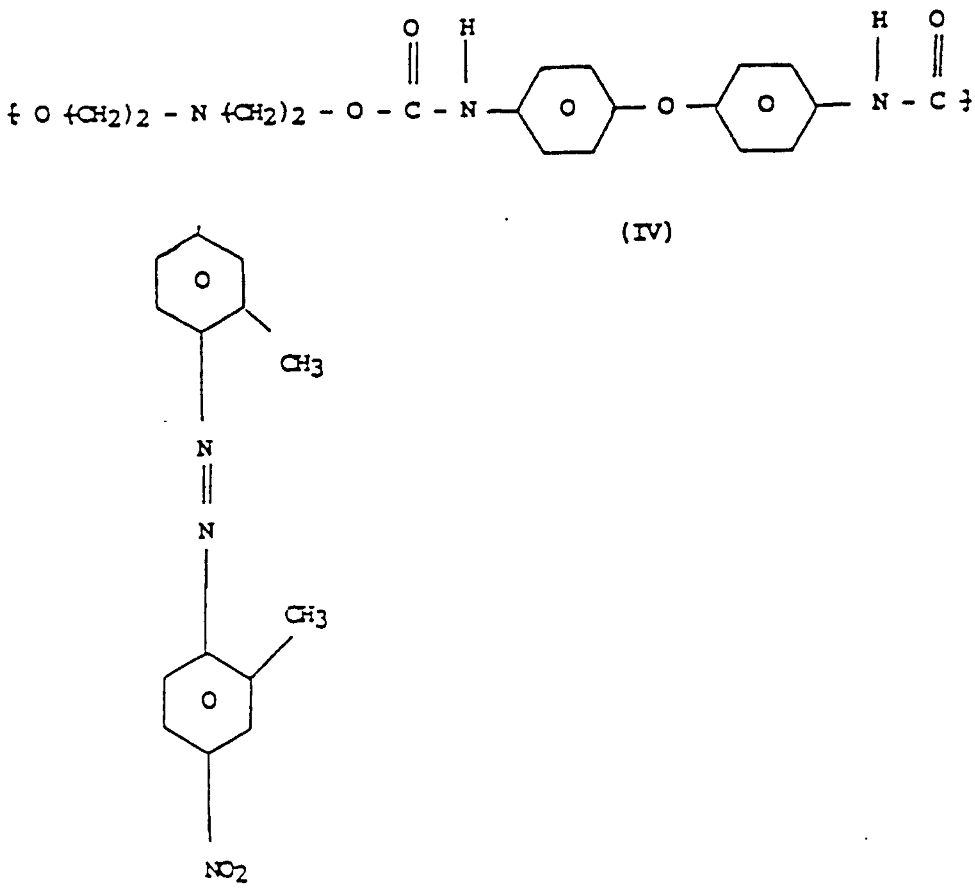

(IV)

**8.** A polymer according to one of the preceding claims, characterised in that it is used in the form of a film, the orientation of the dipoles of which is such that ($\cos\theta$) is at least equal to $10^{-2}$.

**9.** A polymer according to one of Claims 1 to 7, characterised in that is used in the form of a coating.

**10.** A device containing at least one component which is active in non-linear optics, characterised in that the said component is formed by the polymer according to one of Claims 1 to 7.

**11.** A process for polarizing a polymer according to Claims 1 to 9, characterised in that the said material is subjected to an electrical field of between 1 and 100 V per micrometre at a temperature between the initial and final vitreous transition temperatures.

**Patentansprüche**

**1.** Polymere, dadurch gekennzeichnet, daß sie im wesentlichen aus wiederkehrenden Einheiten folgender Formel bestehen:

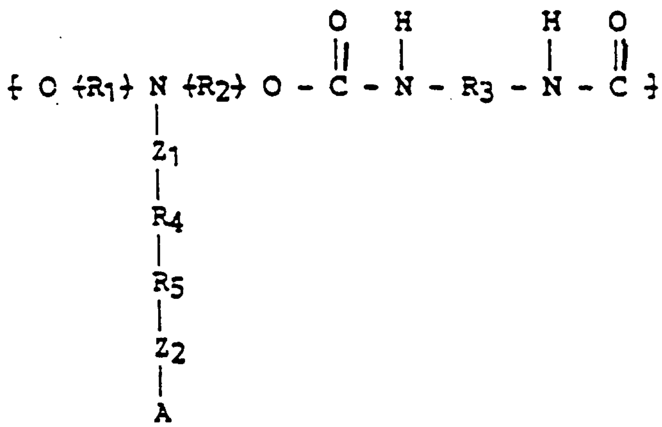

in der bedeuten:

- $R_1$, $R_2$, die gleich oder verschieden sein können, eine geradkettige oder verzweigte Methylenkette mit 2 bis 6 C-Atomen,
- $R_3$ eine aliphatische, aromatische oder araliphatische Kohlenwasserstoffgruppe,
- $R_4$, $R_5$, die gleich oder verschieden sein können, ein Stickstoffatom oder die Gruppe CH oder zwei Kohlenstoffatome, wobei die Bindung $R_4$-$R_5$ eine Dreifachbindung ist,
- $Z_1$, $Z_2$, die gleich oder verschieden sein können, eine aromatische Gruppe, die mindestens einen Substituenten $R_7$ aufweist, der von der Gruppe A verschieden ist, und die unter geradkettigen und verzweigten aliphatischen Gruppen mit 1 bis 6 C-Atomen ausgewählt ist,
und
- A eine Elektronenakzeptorgruppe, vorzugsweise vom Cyano- oder Nitro-Typ,
wobei die Gruppe $Z_2$ mehrere Gruppen A aufweisen kann.

**2.** Polymere nach Anspruch 1, dadurch gekennzeichnet, daß die aromatischen Gruppen $Z_1$, $Z_2$ unter Phenylen, Biphenylen und Naphthylen ausgewählt sind.

**3.** Polymere nach Anspruch 1 oder 2, dadurch gekennzeichnet, daß der Substituent $R_7$ Methyl oder Ethyl ist.

**4.** Polymere nach einem der vorhergehenden Ansprüche, dadurch gekennzeichnet, daß sie ein Zahlenmittel des Molekulargewichts $\overline{M}_n$ von 1 000 bis 15 000 und ein Gewichtsmittel des Molekulargewichts $\overline{M}_w$ von 3 000 bis 100 000 aufweisen.

**5.** Polymere nach einem der vorhergehenden Ansprüche, dadurch gekennzeichnet, daß die Gruppe $R_3$ ein Kohlenwasserstoffrest einen Diisocyanats ist.

**6.** Polymere nach Anspruch 5, dadurch gekennzeichnet, daß das Diisocyanat unter Hexamethylendiisocyanat, Diphenyletherdiisocyanat, Diphenylmethylendiisocyanat und Naphthyldiisocyanat ausgewählt ist.

7. Polymere nach einem der vorhergehenden Ansprüche, dadurch gekennzeichnet, daß sie mindestens eine wiederkehrende Einheit einer der nachstehenden Formeln aufweisen:

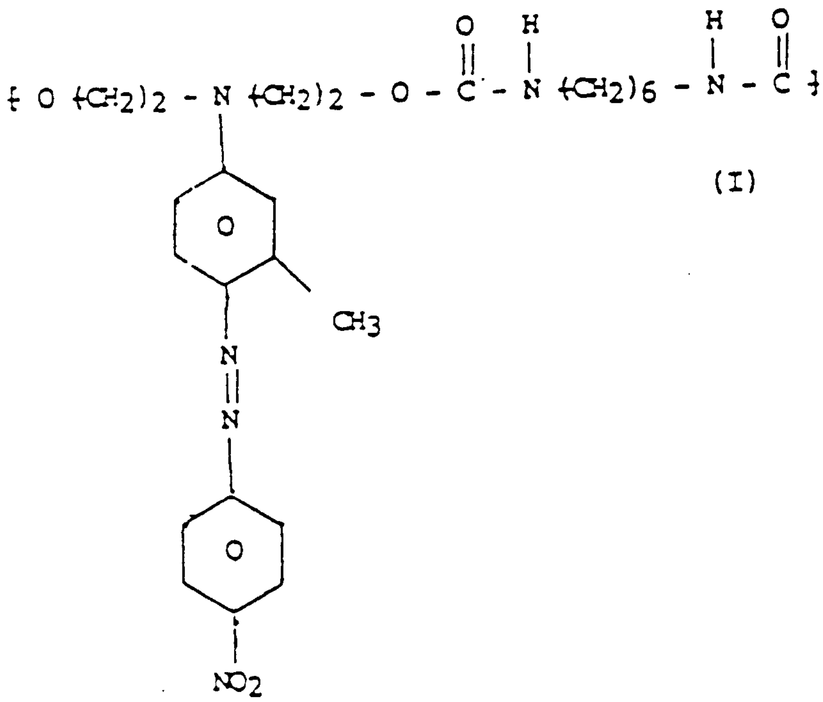

(I)

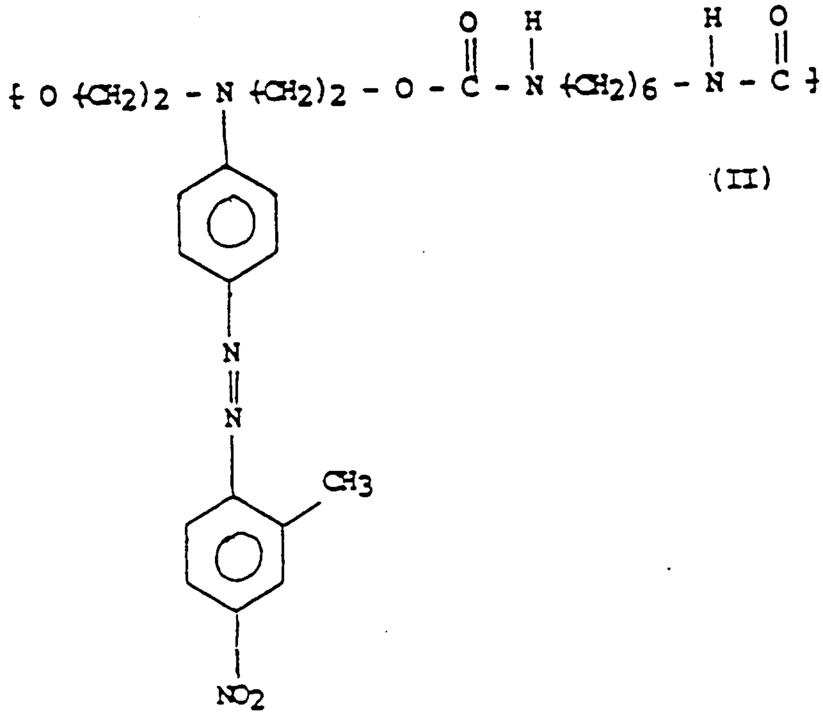

(II)

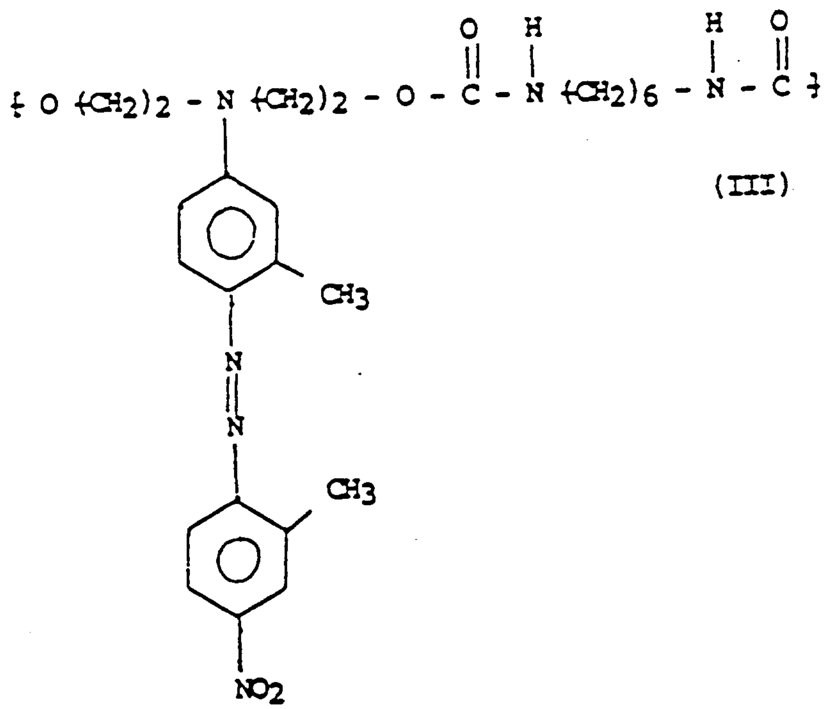

(III)

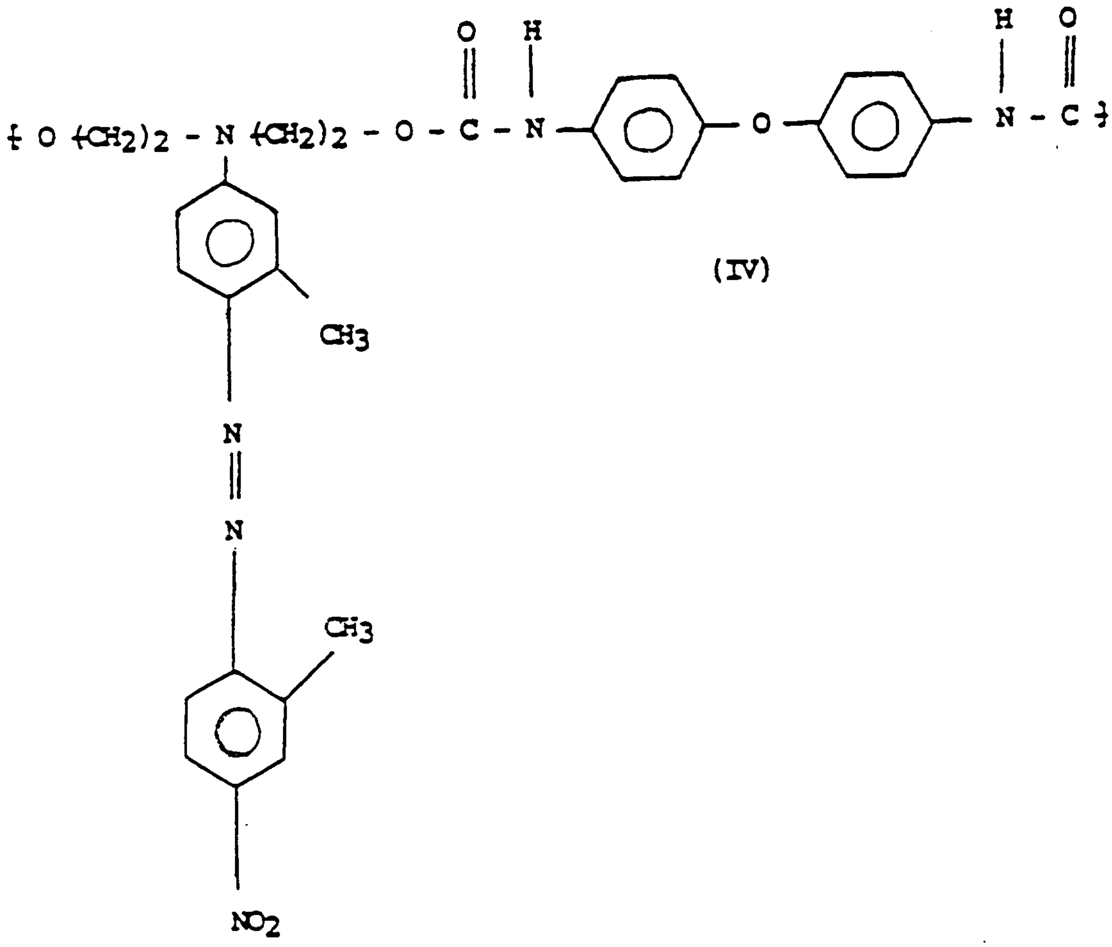

(IV)

**8.** Polymere nach einem der vorhergehenden Ansprüche, dadurch gekennzeichnet, daß sie in Form von Filmen verwendet sind, deren Dipolorientierung so ist, daß cos$\theta$ mindestens gleich $10^{-2}$ ist.

**9.** Polymere nach einem der Ansprüche 1 bis 7, dadurch gekennzeichnet, daß sie in Form eines Überzugs verwendet sind.

**10.** Vorrichtung, die mindestens ein Element mit nichtlinearen optischen Eigenschaften enthält, dadurch gekennzeichnet, daß dieses Element aus einem Polymer nach einem der Ansprüche 1 bis 7 besteht.

**11.** Verfahren zur Polarisation eines Polymers nach den Ansprüchen 1 bis 9, dadurch gekennzeichnet, daß Material bei einer Temperatur im Bereich zwischen dem Beginn und dem Ende des Glasübergangs einem elektrischen Feld von 1 bis 100 V/$\mu$m ausgesetzt wird.